# EUROPÄISCHE PATENTSCHRIFT

(11) **EP 2 100 049 B1**
(45) Veröffentlichungstag und Bekanntmachung des Hinweises auf die Patenterteilung: **23.06.2010**
(21) Anmeldenummer: 07822079.5
(22) Anmeldetag: 31.10.2007
(51) Int. Cl.: F16D 23/06

(54) **KUPPLUNGSKÖRPER MIT ANGEFORMTEM KONUS**
CLUTCH BODY WITH INTEGRALLY FORMED CONE
CORPS D'ACCOUPLEMENT AVEC CÔNE FORMÉ SUR LUI

(30) Priorität: 30.11.2006 DE 102006056487
(43) Veröffentlichungstag der Anmeldung: 16.09.2009
(73) Patentinhaber: Schaeffler KG, 91074 Herzogenaurach (DE)
(72) Erfinder: CZURA, Robert, 91074 Herzogenaurach (DE); DELLERMANN, Franz, 91085 Weisendorf (DE); EIDLOTH, Rainer, 91074 Herzogenaurach (DE); FOLK, Rudolf, 96152 Burghaslach (DE)
(86) Internationale Anmeldenummer: PCT/EP2007/061732
(87) Internationale Veröffentlichungsnummer: WO 2008/064968

(56) Entgegenhaltungen:
- WO-A-03/056200
- DE-A1- 10 115 355
- US-A- 6 016 895

## Beschreibung

### Gebiet der Erfindung

Die vorliegende Erfindung betrifft ein Verfahren zur Herstellung eines Kupplungskörpers einer Synchronisationseinrichtung für ein Schaltgetriebe, welcher einen Kupplungsscheibenabschnitt umfasst, an dem ein Reibkonusabschnitt angeformt ist, der zur reibbehafteten Anlauf gegen zumindest einen Synchronring eine Reibkonusfläche aufweist. Ferner betrifft die vorliegende Erfindung einen Kupplungskörper einer Synchronisationseinrichtung, welcher mit dem erfindungsgemäßen Verfahren hergestellt ist.

### Stand der Technik

Derartige Kupplungskörper finden in Synchronisationseinrichtungen Anwendung, welche bei Schaltgetrieben nach dem Zahnräderwechselprinzip eingesetzt werden, wobei die Synchronisationseinrichtung den Gangwechsel eines meist manuell geschalteten Getriebes vereinfacht. Der Kupplungskörper ist dabei zwischen einem Losrad und zumindest einem Synchronring angeordnet, wobei der Synchronring axial gegen den Kupplungskörper anläuft und der Kupplungskörper selbst verdrehfest mit dem Losrad verbunden ist. Die Verbindung kann beispielsweise über eine Innenverzahnung im Kupplungskörper erfolgen. Kupplungskörper können entweder als plane Scheibe ausgebildet sein, oder einen Reibkonusabschnitt umfassen, welcher entweder über Fügeverfahren mit dem Kupplungsscheibenabschnitt verbunden ist oder einteilig mit diesem hergestellt ist.

Aus der DE 198 11 096 A1 ist ein gattungsgemäßer Kupplungskörper für eine Synchronisationseinrichtung eines Schaltgetriebes offenbart. Dieser ist zweiteilig ausgestaltet, wobei jeder Teil separat an einem Losrad angeordnet ist. Der Kupplungskörper sowie der Reibring, welcher den Reibkonusabschnitt bildet, ist dem Losrad zugeordnet, wobei der Kupplungsscheibenabschnitt während eines Schaltvorgangs über eine Dachverzahnung formschlüssig mit einer Schiebemuffe verbunden werden kann. Ferner dient die Reibkonusfläche des Reibkonusabschnittes zur Zusammenwirkung mit einem Synchronring. Gemäß der Offenbarung ist sowohl das Losrad, der Reibkonusabschnitt sowie der Kupplungsscheibenabschnitt jeweils als ein Einzelteil ausgestaltet, welche insgesamt mittels des Losrades verdrehfest miteinander verbunden sind.

Damit ergibt sich jedoch der Nachteil, dass sowohl der Kupplungsscheibenabschnitt als auch der Reibkonusabschnitt separat voneinander gefertigt werden müssen. Ferner ergibt sich das Erfordernis, dass jedes Einzelteil mit dem Losrad separat verbunden werden muss. Die Verbindung erfordert dabei zumindest eine genaue Ausrichtung der Teile relativ zum Losrad sowie relativ zueinander.

Eine weitere Ausführungsform eines gattungsgemäßen Kupplungskörpers ist aus der DE 101 63 828 A1 bekannt. Der hierin offenbarte Kupplungskörper umfasst eine Kupplungsscheibe und einen Konusring mit zumindest einer Reibfläche. Der Konusring ist dabei an die Kupplungsscheibe mittels eines Fügeverfahrens angebracht. Das Fügeverfahren umfasst eine Schweißnaht, welche sowohl innenseitig als auch außenseitig umlaufend zwischen dem Konusring und der Kupplungsscheibe angebracht wird.

Bei dieser technischen Ausgestaltung des Kupplungskörpers ist wiederum ein Fügeverfahren notwendig, welches entsprechende Positioniervorgänge der beiden Komponenten, bestehend aus Konusring und Kupplungsscheibe, erforder. Zumeist ist noch eine Nachbearbeitung der Fügeverbindung notwendig, welche einen weiteren Nachteil der Ausführungsform darstellt.

Es ist daher die Aufgabe der vorliegenden Erfindung, ein Verfahren zur Herstellung eines Kupplungskörpers zu schaffen, welches durch einfache Verfahrensschritte gekennzeichnet ist und die Herstellung des Kupplungskörpers aus einem einzigen Ausgangsteil ermöglicht.

Diese Aufgabe wird ausgehend von einem Verfahren zur Herstellung eines Kupplungskörpers einer Synchronisationseinrichtung gemäß des Oberbegriffs des Anspruchs 1 sowie einem Kupplungskörper gemäß des Oberbegriffs des Anspruchs 10 in Verbindung mit den jeweils kennzeichnenden Merkmalen gelöst. Vorteilhafte Weiterbildungen der Erfindung sind in den abhängigen Ansprüchen angegeben.

Die Erfindung schließt die technische Lehre ein, dass das Verfahren zur Herstellung eines Kupplungskörpers wenigstens die Schritte des Bereitstellens eines Stahlbleches, des Kragenziehens eines Kragenabschnittes aus der Ebene des Stahlbleches in einer ersten Richtung entlang der Symmetrieachse und des teilweisen Rückstauchens des Kragenabschnittes entgegen der ersten Richtung des Kragenziehens zur Bildung des Reibkonusabschnittes umfasst.

Damit wird erfindungsgemäß der Vorteil geschaffen, dass der Kupplungskörper lediglich mittels einfacher Umformverfahren aus einem Stahlblech hergestellt werden kann. Der Kupplungskörper weist dabei alle zum Betrieb erforderlichen Merkmale auf, welche im Wesentlichen aus dem Kupplungsscheibenabschnitt sowie dem Reibkonusabschnitt bestehen. Die Grundform des Kupplungskörpers umfasst lediglich einen Ring mit einer Passverzahnung und einen an diesen angeformten Konus. Der Konus kann aufgrund der direkten Anformung an den Ring in einem sehr geringen Toleranzband hergestellt werden. Dies ist besonders günstig bezüglich der auftretenden Schaltkräfte und des durch den Benutzer erfahrbaren Schaltgefühls.

Weiterhin ist durch die einteilige Herstellung aus einem einfachen Stahlband eine erhebliche Reduzierung des erforderlichen Herstellungsaufwandes durch den Entfall von nachgelagerten Fügevorgängen möglich. Die Einbau- und Funktionsmaße werden dabei durch die Umformung selbst eingehalten, wobei die Umformung insbesondere die Verzahnung und die Reibkonusfläche betrifft. Die durch die Umformung erreichten Genauigkeiten und Oberflächeneigenschaften sind für einen direkten Verbau des Kupplungskörpers im Getriebe geeignet. Damit wird ein Kupplungskörper geschaffen, bei dem sich die Fertigungs-, Handlings- und Montageaufwendungen gegenüber dem bekannten Stand der Technik deutlich verringern lässt.

Das Stahlblech, welches als Ausgangsmaterial im ersten Verfahrensschritt bereitgestellt wird, kann beispielsweise eine Dicke von 2 bis 10, vorzugsweise von 3 bis 7 und besonders bevorzugt von 5mm umfassen. Das Gefüge des Ausgangsmaterials kann einen normalisierten Zustand aufweisen, welcher erst durch die entstehende Kaltverfestigung und einen nachgeschalteten Wärmebehandlungsvorgang die endgültige Härte erreicht. Beispielhaft kann ein Einsatzstahl wie ein 16MnCr5 oder ein Material aus dem Anwendungsgebiet der Wälzlager herangezogen werden, welches beispielsweise 100Cr6 entspricht, wobei der Kupplungskörper selbstverständlich auch aus einem anderen Material, beispielsweise ein Bundmetall oder ein Kunststoff umfassen kann.

Gemäß einer weiteren vorteilhaften Ausführungsform der Erfindung ist vorgesehen, dass das Verfahren nach dem Bereitstellen des Stahlbleches und vor dem Kragenziehen einen Lochvorgang umfasst, um ein Loch aus dem Stahlblech in Richtung einer Symmetrieachse auszuschneiden. Der Schnittvorgang kann ein einfaches Stanzen umfassen, so dass das für das Kragenziehen notwendige Ausgangswerkstück bereitgestellt werden kann.

Vorteilhafterweise bildet sich nach dem Rückstauchen des Kragenabschnittes zwischen dem Kupplungsscheibenabschnitt und dem Reibkonusabschnitt eine Faltung aus, welche derart ausgestaltet ist, dass ein Rückstauchbereich planparallel zum Kupplungsscheibenabschnitt gebildet wird, wobei auch Rückstauchwinkel von 0° bis 90°, vorzugsweise 45° vorgesehen werden können. Der Prozessschritt des Kragenziehens streckt den Reibkonusabschnitt aus der Ebene des Ausgangsstahlbleches in Richtung der Symmetrieachse ab. Dabei entsteht ein Konusabschnitt in Form eines abgestreckten Rohrabschnittes. Beim nachfolgenden Rückstauchen wird ein Teil des Rohrabschnittes in Richtung des Kupplungsscheibenabschnittes zurückgestaucht, so dass sich eine Faltenbildung einstellt. Die Faltung ist derart ausgebildet, dass ein Teilbereich des gebildeten Rohrabschnittes als Rückstauchbereich planparallel zum Kupplungsscheibenabschnitt an diesen wieder angedrückt wird, so dass sich der Rohrabschnitt insgesamt verkürzt und den Reibkonusabschnitt bildet. Der Reibkonusabschnitt kann bei diesem Pressvorgang auch den erforderlichen Konuswinkel der Reibkonusfläche erhalten. Der sich damit ergebene Vorteil ist eine kompakte und dickere Struktur des Kupplungsscheibenabschnittes, welcher nicht mehr lediglich auf die Dicke des ursprünglich verwendeten Stahlbleches begrenzt ist, sondern um die Dicke des Abschnittes des Rückstauchbereiches erweitert wird.

Eine weitere vorteilhafte Ausführungsform des Verfahrens zur Herstellung des erfindungsgemäßen Kupplungskörpers umfasst ein Höhenschleifen des Reibkonusabschnittes nach dem Rückstauchen des Kragenabschnittes. Erst nach dem Höhenschleifen wird die gewünschte Reibkonusfläche ausgebildet, gegen die im späteren Betrieb des Kupplungskörpers der Synchronring anlaufen kann, um einen Reibkontakt zu bilden. Beim Höhenschleifen kann zugleich die erforderliche Qualität der Oberfläche der Reibkonusfläche herbeigeführt werden. Jedoch besteht ferner die Möglichkeit, sowohl die gewünschte geometrische Gestalt mit den jeweiligen Toleranzen und Maße der Reibkonusfläche mittels eines Walzverfahrens herzustellen.

Eine weitere vorteilhafte Ausgestaltung des erfindungsgemäßen Verfahrens zur Herstellung eines Kupplungskörpers sieht vor, dass der Kupplungskörper eine Innenfläche aufweist, in die eine Innenverzahnung eingebracht wird. Diese kann beispielsweise mittels eines Fließpressens oder eines Walzverfahrens in die Innenfläche eingebracht werden. Die Innenverzahnung in der Innenfläche des Kupplungskörpers dient zur formschlüssigen Verbindung mit dem Losrad, an dem der Kupplungskörper verdrehfest angeordnet werden muss. Wenn der Kupplungskörper mittels eines Schweißverfahrens an das Losrad angebracht wird, ist die Innenfläche bevorzugt als zylindrischer Durchgang auszugestalten.

Gemäß einer weiteren vorteilhaften Ausführungsform wird der Kupplungskörper wärmebehandelt, wobei die Wärmebehandlung entweder am gesamten Kupplungskörper oder an Teilabschnitten ausgeführt wird. Die Wärmebehandlung kann nach dem Vorgang des Rückstauchens des Kragenabschnittes entgegen der ersten Richtung des Kragenziehens erfolgen, so dass der bereits wärmebehandelte Kupplungskörper im Bereich der Reibkonusfläche höhengeschliffen wird. Durch die Wärmebehandlung erhält der Kupplungskörper die endgültige Härte, wobei die Wärmebehandlung beispielsweise ein Umwandlungshärten umfassen kann, wobei ferner auch Verfahren zur Ausscheidungshärtung, zur Kalthärtung oder Härteverfahren mit Laserstrahlung vorgenommen werden können.

Entweder wird der Kupplungskörper insgesamt einer Wärmebehandlung unterzogen, wobei auch Teile des Kupplungskörpers wie beispielsweise ausschließlich der Reibkonusabschnitt oder beispielsweise ausschließlich der Bereich der Außenverzahnung, welche am Kupplungsscheibenabschnitt angeordnet ist, wärmebehandelt werden können. Hierbei bietet sich insbesondere die Wärmeinbringung mittels Laserstrahlung an, da diese mit einer besonders hohen Ortsauflösung erfolgen kann.

Ein weiterer Vorteil des Verfahrens zur Herstellung eines Kupplungskörpers gemäß der vorliegenden Erfindung kann darin gesehen werden, dass Teilabschnitte des Kupplungskörpers mittels spanenden Verfahren hergestellt werden, wobei andere Teilabschnitte ausschließlich auf der Herstellung von Umformverfahren beruhen. Die spanenden Verfahren können beispielsweise das Höhenschleifen der Reibkonusfläche betreffen, wobei auch eine spanende Nachbearbeitung der Innenverzahnung oder der Außenverzahnung vorgesehen sein kann. Ferner besteht die Möglichkeit, die Plananlage des Kupplungsscheibenabschnittes an das benachbart angeordnete Losrad einer Spanbearbeitung zu unterziehen. Insbesondere das ringförmige Ende des Reibkonusabschnittes kann mittels einer geometrisch bestimmten oder geometrisch unbestimmten Schneide spanend bearbeitet werden, da sich beim Kragenziehen bedingt durch eine Walztextur im Ausgangsmaterial des Stahlbleches Zipfel bilden können.

Gemäß einer weiteren vorteilhaften Ausführungsform des Verfahrens zur Herstellung eines erfindungsgemäßen Kupplungskörpers ist vorgesehen, dass im radial äußeren Bereich des Kupplungsscheibenabschnittes eine Außenverzahnung mittels eines Fließpressens angeformt wird. Dabei ist die Herstellung der Außenverzahnung nicht auf den Vorgang eines Fließpressens begrenzt, sondern die Außenverzahnung kann auch mittels eines Hubstoßens, Fräsens, Anwalzens oder sonstigen Verfahren erfolgen.

Vorteilhafterweise wird in den Kupplungsscheibenabschnitt wenigstens eine fensterförmige Aussparung eingebracht, um ein Eingriffsmöglichkeit für Halteelemente eines angrenzenden Synchronzwischenringes zu schaffen. Die fensterförmigen Aussparungen können über dem Umfang des Kupplungskörpers gleich verteilt mehrfach angeordnet sein. Die fensterförmigen Aussparungen können rechteckförmig, quadratisch oder rund ausgeführt werden, so dass eine entsprechende Eingriffsgeometrie der Halteelemente zum Formschluss des Kupplungskörpers mit dem Synchronzwischenring entsteht.

Der Schutzbereich der vorliegenden Erfindung erstreckt sich ferner auf einen Kupplungskörper einer Synchronisationseinrichtung für ein Schaltgetriebe, welcher einen Kupplungsscheibenabschnitt umfasst, an dem ein Reibkonusabschnitt angeformt ist, der zum reibbehafteten Anlauf gegen zumindest einen Synchronring eine Reibkonusfläche aufweist, wie in Anspruch 10 definiert ist.

Der Kupplungsscheibenabschnitt sowie der Reibkonusabschnitt sind dabei zumindest mittels eines Kragenziehverfahrens und eines Rückstauchverfahrens einteilig aus einem Stahlblech hergestellt. Die Herstellung des Kupplungskörpers ist dabei nicht auf diese beiden Verfahren begrenzt, wobei zumindest das Kragenziehverfahren zur geometrischen Ausgestaltung des Reibkonusabschnittes vorgesehen ist, und wobei dieser mit dem anschließenden Rückstauchverfahren teilweise wieder gegen den Kupplungsscheibenabschnitt zurückgestaucht wird, um eine Faltung zu bilden. Dabei entsteht ein Reibkonusabschnitt, welcher aus einem Teilabschnitt des gezogenen Kragens besteht.

Eine weitere vorteilhafte Ausführungsform des Kupplungskörpers sieht vor, dass dieser Radienformen und/oder Oberflächenstrukturen aufweist, wie diese bei Umformverfahren aus der Gruppe der Kragenzieh- und Rückstauchverfahren von Stahlblechen entstehen. Ferner weist der Kupplungskörper eine den Verfahren des Kragenziehens und des anschließenden Rückstauchens entsprechende Textur im Material auf, wobei die genannten Verfahrensschritte den Kupplungskörper insofern auszeichnen, als die Verfahrensschritte im kalten Zustand bzw. bei Raumtemperatur ausgeführt werden.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Querschnitt eines Kupplungskörpers, welcher mit dem erfindungsgemäßen Verfahren hergestellt ist; und
- Figur 2: eine perspektivische Ansicht des Kupplungskörpers gemäß Figur 1.

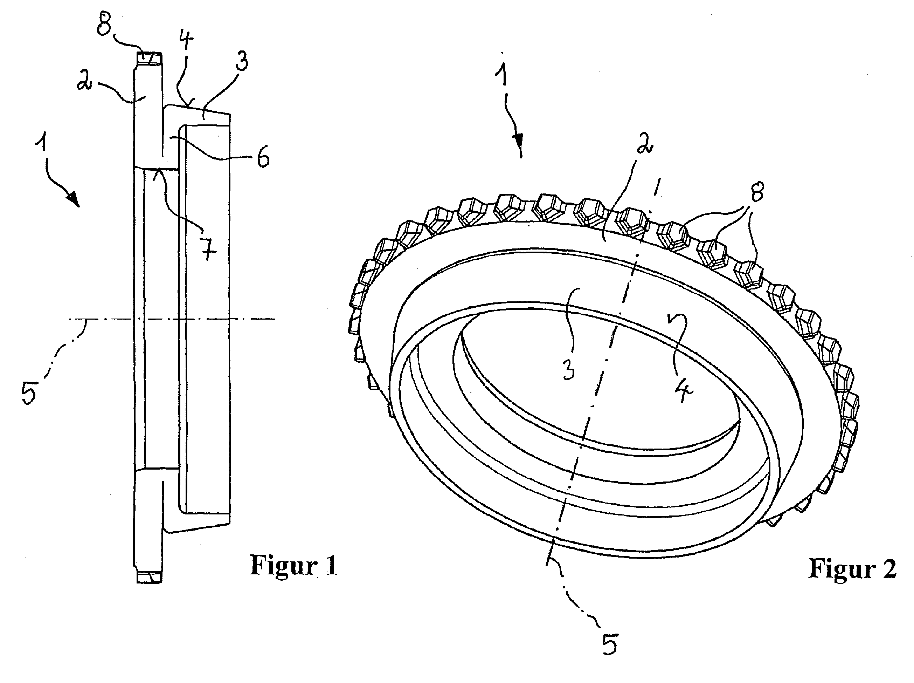

Der in der Figur 1 im Querschnitt dargestellte Kupplungskörper 1 ist ringförmig um eine Symmetrieachse 5 ausgebildet. Der Kupplungskörper 1 besteht aus einem Kupplungsscheibenabschnitt 2, an welchem ein Reibkonusabschnitt 3 angeformt ist. Der Kupplungskörper 1 ist aus einem Stahlblech mittels Umformverfahren hergestellt, wobei der Kupplungsscheibenabschnitt 2 aus einem unverformten Blechabschnitt besteht, und der Reibkonusabschnitt 3 mittels eines Kragenziehens in Richtung der Symmetrieachse 5 aus der Ebene des Kupplungsscheibenabschnittes 2 herausgezogen ist.

Ein auf das Kragenziehen folgender Schritt eines Rückstauchens staucht den Reibkonusabschnitt 3 zumindest teilweise in Richtung des Kupplungsscheibenabschnittes 2 zurück, wobei während des Rückstauchens der Reibkonusabschnitt 3 im Durchmesser vergrößert wird, so dass der Zwischenbereich zwischen dem Reibkonusabschnitt 3 und dem Beginn des zum Kragen gezogenen Bereiches durch den Rückstauchbereich 6 gebildet wird. Dieser ist im fertigen Zustand nach dem Rückstauchen des Reibkonusabschnittes 3 parallel zum Kupplungsscheibenabschnitt 2 ausgebildet, so dass eine Fuge entsteht.

Der Kupplungsscheibenabschnitt 2 ist im Rückstauchbereich um die Dicke des Rückstauchbereiches 6 verbreitert. Gleichzeitig bildet sich eine Innenfläche innerhalb des Kupplungskörpers 1 aus, welche mit dem Bezugszeichen 7 gekennzeichnet ist. An dieser Innenfläche ist eine - nicht näher dargestellte - Innenverzahnung angebracht, um den Kupplungskörper am Losrad formschlüssig zu befestigen.

Außenseitig weist der Kupplungskörper 1 im Bereich des Kupplungsscheibenabschnittes 2 eine Außenverzahnung 8 auf, welche zugleich eine Dachanspitzung umfasst, welche graphisch innerhalb der Außenverzahnung 8 dargestellt ist. Der Reibkonusabschnitt 3 umfasst eine Reibkonusfläche 4, gegen die ein Synchronring in Richtung der Symmetrieachse 5 anlaufen kann.

Figur 2 zeigt eine perspektivische Ansicht des Kupplungskörpers gemäß der Darstellung in Figur 1, wobei der Kupplungsscheibenabschnitt 2 und der Reibkonusabschnitt 3 erkennbar sind. Die Reibkonusfläche 4 erstreckt sich außenseitig umlaufend über dem Reibkonusabschnitt 3, wobei der Kupplungsscheibenabschnitt 2 eine Außenverzahnung 8 umfasst, wobei die Dachanspitzung aus Richtung des Reibkonusabschnittes 3 angeformt ist. Der Kupplungskörper 1 erstreckt sich rotationssymmetrisch um die Symmetrieachse 5, wobei der Reibkonusabschnitt 3 konzentrisch zum Kupplungsscheibenabschnitt 2 angeordnet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Kupplungskörper
- 2: Kupplungsscheibenabschnitt
- 3: Reibkonusabschnitt
- 4: Reibkonusfläche
- 5,: Symmetrieachse
- 6: Rückstauchbereich
- 7: Innenfläche
- 8: Außenverzahnung

## Patentansprüche

1. Verfahren zur Herstellung eines Kupplungskörpers (1) einer Synchronisationseinrichtung für ein Schaltgetriebe, welcher einen Kupplungsscheibenabschnitt (2) umfasst, an dem ein Reibkonusabschnitt (3) angeformt ist, der zum reibbehafteten Anlauf gegen zumindest einen Synchronring eine Reibkonusfläche (4) aufweist, wobei das Verfahren zur Herstellung zumindest die folgenden Schritte umfasst:
- Bereitstellen eines Stahlbleches
- Kragenziehen eines Kragenabschnittes aus der Ebene des Stahlbleches in einer ersten Richtung entlang der Symmetrieachse (5)
- teilweises Rückstauchen des Kragenabschnittes entgegen der ersten Richtung des Kragenziehens zur Bildung des Reibkonusabschnittes (3).

2. Verfahren zur Herstellung eines Kupplungskörpers (1) nach Anspruch 1, **dadurch gekennzeichnet, dass** nach dem Bereitstellen des Stahlbleches und vor dem Kragenziehen ein Loch aus dem Stahlblech in Richtung einer Symmetrieachse (5) ausgeschnitten wird.

3. Verfahren zur Herstellung eines Kupplungskörpers (1) nach Anspruch 1 oder 2, **dadurch gekennzeichnet, dass** sich nach dem Rückstauchen des Kragenabschnittes zwischen dem Kupplungsscheibenabschnitt (2) und dem Reibkonusabschnitt (3) eine Faltung ausbildet, derart, dass ein Rückstauchbereich (6) planparallel zum Kupplungsscheibenabschnitt (2) gebildet wird.

4. Verfahren zur Herstellung eines Kupplungskörpers (1) nach einem der Ansprüche 1 bis 3, **dadurch gekennzeichnet, dass** nach dem Rückstauchen des Kragenabschnittes ein Höhenschleifen des Reibkonusabschnittes (3) ausgeführt wird, um die Reibkonusfläche (4) zu bilden.

5. Verfahren zur Herstellung eines Kupplungskörpers (1) nach einem der vorgenannten Ansprüche, **dadurch gekennzeichnet, dass** der Kupplungskörper (1) eine Innenfläche (7) aufweist, in die eine Innenverzahnung eingebracht wird.

6. Verfahren zur Herstellung eines Kupplungskörpers (1) nach einem der vorgenannten Ansprüche, **dadurch gekennzeichnet, dass** der Kupplungskörper (1) wärmebehandelt wird, wobei die Wärmebehandlung entweder am gesamten Kupplungskörper (1) oder an Teilabschnitten ausgeführt wird.

7. Verfahren zur Herstellung eines Kupplungskörpers (1) nach einem der vorgenannten Ansprüche, **dadurch gekennzeichnet, dass** Teilabschnitte des Kupplungskörpers (1) mittels spanenden Verfahren hergestellt werden.

8. Verfahren zur Herstellung eines Kupplungskörpers (1) nach einem der vorgenannten Ansprüche, **dadurch gekennzeichnet, dass** im radial äußeren Bereich des Kupplungsscheibenabschnittes (2) eine Außenverzahnung (8) mittels eines Fließpressens angeformt wird.

9. Verfahren zur Herstellung eines Kupplungskörpers (1) nach einem der vorgenannten Ansprüche, **dadurch gekennzeichnet, dass** in den Kupplungsscheibenabschnitt (2) wenigstens eine fensterförmige Aussparung eingebracht wird, um eine Eingriffsmöglichkeit für Halteelemente eines angrenzenden Synchronzwischenringes zu schaffen.

10. Kupplungskörper (1) einer Synchronisationseinrichtung für ein Schaltgetriebe, welcher einen Kupplungsscheibenabschnitt (2) umfasst, an dem ein Reibkonusabschnitt (3) angeformt ist, der zum reibbehafteten Anlauf gegen zumindest einen Synchronring eine Reibkonusfläche (4) aufweist, **dadurch gekennzeichnet, dass** der Kupplungsscheibenabschnitt (2) und der Reibkonusabschnitt (3) zumindest mittels eines Kragenziehverfahrens zum Ziehen des Reibkonusabschnittes (3) und eines Rückstauchverfahrens zum Rückstauchen des Reibkonusabschnittes (3) einteilig aus einem Stahlblech hergestellt sind.

11. Kupplungskörper (1) nach Anspruch 10, **dadurch gekennzeichnet, dass** der Kupplungskörper (1) Radienformen und/oder Oberflächenstrukturen aufweist, wie diese bei Umformverfahren aus der Gruppe der Kragenzieh- und der Rückstauchverfahren von Stahlblechen entstehen.

12. Kupplungskörper (1) nach Anspruch 10 oder 11, **dadurch gekennzeichnet, dass** zumindest der Reibkonusabschnitt (3) eine Beschichtung umfasst, wobei die Beschichtung mittels eines Flammspritzens aufgebracht ist oder aus einem Carbonbelag besteht.

## Claims

1. Method for the production of a clutch body (1) of a synchronizing device for a shift transmission, which clutch body (1) comprises a clutch disc section (2), on which is integrally formed a friction cone section (3), which has a friction cone surface (4) for frictional engagement against at least one synchronizing ring, the production method comprising at least the following steps:
- providing a steel sheet
- drawing the collar of a collar section out of the plane of the steel sheet in a first direction along the axis (5) of symmetry
- partial reverse upsetting of the collar section counter to the first direction of collar drawing in order to form the friction cone section (3).

2. Method for the production of a clutch body (1) according to Claim 1, **characterized in that**, after the provision of the steel sheet and before collar drawing, a hole is cut out of the steel sheet in the direction of an axis (5) of symmetry.

3. Method for the production of a clutch body (1) according to Claim 1 or 2, **characterized in that**, after the reverse upsetting of the collar section, a fold is formed between the clutch disc section (2) and the friction cone section (3), such that a reverse upset region (6) is formed in a manner plane-parallel with respect to the clutch disc section (2).

4. Method for the production of a clutch body (1) according to one of Claims 1 to 3, **characterized in that**, after the reverse upsetting of the collar section, grinding to height of the friction cone section (3) is carried out in order to form the friction cone surface (4).

5. Method for the production of a clutch body (1) according to one of the preceding claims, **characterized in that** the clutch body (1) has an inner surface (7), in which an internal tooth set is made.

6. Method for the production of a clutch body (1) according to one of the preceding claims, **characterized in that** the clutch body (1) is heat treated, the heat treatment being carried out either on the entire clutch body (1) or on partial sections.

7. Method for the production of a clutch body (1) according to one of the preceding claims, **characterized in that** partial sections of the clutch body (1) are produced by means of machining methods.

8. Method for the production of a clutch body (1) according to one of the preceding claims, **characterized in that** an external tooth set (8) is formed integrally in the radially outer region of the clutch disc section (2) by means of extrusion.

9. Method for the production of a clutch body (1) according to one of the preceding claims, **characterized in that** at least one gap in the form of a window is made in the clutch disc section (2) in order to provide a possibility of engagement for holding elements of an adjoining intermediate synchronizing ring.

10. Clutch body (1) of a synchronizing device for a shift transmission, which clutch body (1) comprises a clutch disc section (2), on which is integrally formed a friction cone section (3), which has a friction cone surface (4) for frictional engagement against at least one synchronizing ring, **characterized in that** the clutch disc section (2) and the friction cone section (3) are produced in one piece from a steel sheet at least by means of a collar-drawing method for the purpose of drawing the friction cone section (3) and by means of a reverse upsetting method for the purpose of reverse upsetting the friction cone section (3).

11. Clutch body (1) according to Claim 10, **characterized in that** the clutch body (1) has radius shapes and/or surface structures of the kind which arise in forming methods from the group comprising collar drawing and reverse upsetting methods for steel sheets.

12. Clutch body (1) according to Claim 10 or 11, **characterized in that** at least the friction cone section (3) comprises a coating, the coating being applied by means of flame spraying or being composed of a carbon facing.

## Revendications

1. Procédé de fabrication d'un corps d'embrayage (1) d'un dispositif de synchronisation pour une transmission à changement de vitesse, qui comprend une portion de disque d'embrayage (2) sur laquelle est façonnée une portion de cône de friction (3) qui présente une surface de cône de friction (4) pour le roulement à friction contre au moins une bague de synchronisation, le procédé de fabrication comprenant au moins les étapes suivantes :
- fourniture d'une tôle d'acier
- soyage d'une portion de col dans le plan de la tôle d'acier dans une première direction le long de l'axe de symétrie (5)
- refoulement inverse partiel de la portion de col à l'encontre de la première direction de soyage pour former la portion de cône de friction (3).

2. Procédé de fabrication d'un corps d'embrayage (1) selon la revendication 1, **caractérisé en ce qu'**après la fourniture de la tôle d'acier et avant le soyage, on estampe un trou dans la tôle d'acier dans la direction d'un axe de symétrie (5).

3. Procédé de fabrication d'un corps d'embrayage (1) selon la revendication 1 ou 2, **caractérisé en ce qu'**après le refoulement inverse de la portion de col, il se forme entre la portion de disque d'embrayage (2) et la portion de cône de friction (3) un pli tel qu'une région de refoulement inverse (6) soit formée avec un plan parallèle à la portion de disque d'embrayage (2).

4. Procédé de fabrication d'un corps d'embrayage (1) selon l'une quelconque des revendications 1 à 3, **caractérisé en ce qu'**après le refoulement inverse de la portion de col, on effectue un meulage de hauteur de la portion de cône de friction (3), afin de former la surface (4) de cône de friction.

5. Procédé de fabrication d'un corps d'embrayage (1) selon l'une quelconque des revendications précédentes, **caractérisé en ce que** le corps d'embrayage (1) présente une surface interne (7) dans laquelle est réalisée une denture interne.

6. Procédé de fabrication d'un corps d'embrayage (1) selon l'une quelconque des revendications précédentes, **caractérisé en ce que** le corps d'embrayage (1) est traité thermiquement, le traitement thermique étant effectué soit sur l'ensemble du corps d'embrayage (1) soit sur des portions partielles.

7. Procédé de fabrication d'un corps d'embrayage (1) selon l'une quelconque des revendications précédentes, **caractérisé en ce que** des portions partielles du corps d'embrayage (1) sont fabriquées au moyen d'un procédé par enlèvement de copeaux.

8. Procédé de fabrication d'un corps d'embrayage (1) selon l'une quelconque des revendications précédentes, **caractérisé en ce que** dans la région radialement extérieure de la portion de disque d'embrayage (2) est façonnée une denture externe (8) au moyen d'un formage par extrusion.

9. Procédé de fabrication d'un corps d'embrayage (1) selon l'une quelconque des revendications précédentes, **caractérisé en ce que** dans la portion de disque d'embrayage (2) est réalisé au moins un évidement en forme de fenêtre, afin de fournir une possibilité d'engagement pour des éléments de retenue d'une bague intermédiaire de synchronisation adjacente.

10. Corps d'embrayage (1) d'un dispositif de synchronisation pour une transmission à changement de vitesse, qui comprend une portion de disque d'embrayage (2) sur laquelle est façonnée une portion de cône de friction (3) qui présente une surface de cône de friction (4) pour le roulement à friction contre au moins une bague de synchronisation, **caractérisé en ce que** la portion de disque d'embrayage (2) et la portion de cône de friction (3) sont fabriquées d'une seule pièce en une tôle d'acier au moins au moyen d'un procédé de soyage pour emboutir la portion de cône de friction (3) et d'un procédé de refoulement inverse pour refouler vers l'arrière la portion de cône de friction (3).

11. Corps d'embrayage (1) selon la revendication 10, **caractérisé en ce que** le corps d'embrayage (1) présente des formations en rayon et/ou des structures de surfaces telles qu'elles se produisent lors de procédés de façonnage du groupe des procédés de soyage et de refoulement inverse de tôles d'acier.

12. Corps d'embrayage (1) selon la revendication 10 ou 11, **caractérisé en ce qu'**au moins la portion de cône de friction (3) comprend un revêtement, le revêtement étant appliqué au moyen d'une pulvérisation à la flamme ou se composant d'un revêtement au carbone.
